Europäisches Patentamt

(19) European Patent Office

Office européen des brevets

(11) **EP 0 424 220 B1**

(12) **FASCICULE DE BREVET EUROPEEN**

(45) Date de publication et mention
de la délivrance du brevet:
**04.03.1998 Bulletin 1998/10**

(51) Int. Cl.$^6$: **C03C 3/11**, C03C 14/00,
C03C 10/08

(21) Numéro de dépôt: **90402851.1**

(22) Date de dépôt: **12.10.1990**

(54) **Compositions verrières oxyazotées, leurs précurseurs et leur application à la préparation de compositions vitrocéramiques et de matériaux composites**

Oxynitrid-Glaszusammensetzungen, ihre Vorläufer und ihre Verwendung zur Herstellung von Glaskeramikzusammensetzungen und von Verbundwerkstoffen

Oxynitride glass compositions, their precursors and their application for making glass-ceramics compositions and composite materials

(84) Etats contractants désignés:
**AT BE CH DE DK ES FR GB GR IT LI LU NL SE**

(30) Priorité: **18.10.1989 FR 8913589**

(43) Date de publication de la demande:
**24.04.1991 Bulletin 1991/17**

(73) Titulaire:
**AEROSPATIALE Société Nationale Industrielle**
**75781 Paris Cédex 16 (FR)**

(72) Inventeurs:
• **Drouet, Claudette**
**F-65290 Juillan (FR)**
• **Laurent, Yves**
**F-35510 Cesson Sevigne (FR)**
• **Mennessier, Erik**
**F-65000 Tarbes (FR)**
• **Poquillon, Laurence**
**F-30000 Rennes (FR)**
• **Verdier, Patrick**
**F-35690 Acigne (FR)**

(74) Mandataire:
**Dubois-Chabert, Guy et al**
**c/o BREVATOME**
**25, rue de Ponthieu**
**75008 Paris (FR)**

(56) Documents cités:
**EP-A- 0 239 263           WO-A-86/02064**

• **CHEMICAL ABSTRACTS, vol. 104, no. 12, mars 1986, Columbus, OH (US); T. HAYASHI et al., p. 336, AN 93899d**
• **COLLECTED PAPERS, XIV INTERNATL. CONGRESS ON GLASS, 1986, Indian Ceramic Society, Calcutta (IN); P.K. DAS et al., pp. 104-109**

## Description

La présente invention concerne des compositions verrières oxyazotées, plus particulièrement de compositions d'alumino-silicate de magnésium oxyazotées. Elle concerne aussi les précurseurs de ces compositions ainsi que leur application à la préparation de compositions vitrocéramiques et de matériaux composites comprenant ces vitrocéramiques.

On sait que la présence d'azote au sein d'une matrice vitreuse fait varier considérablement les propriétés physiques et chimiques des verres. C'est ainsi que l'on peut observer notamment pour les verres oxyazotés :

- une augmentation de la résistance à la lixiviation,
- une augmentation des caractéristiques mécaniques telles que la dureté et les modules élastiques (modules d'Young, de cisaillement...)
- une diminution du coefficient de dilatation thermique,
- une augmentation de la viscosité
- une valeur élevée du facteur de Hruby.

L'augmentation de ces deux dernières caractéristiques (viscosité, facteur de Hruby) a pour conséquence de diminuer la vitesse de recristallisation des verres oxyazotés. Ce phénomène est ainsi plus facile à contrôler et l'évolution de la cristallisation, donc des caractéristiques des vitrocéramiques, plus lente lors des traitements thermiques ultérieurs.

En ce qui concerne, par ailleurs, les compositions vitrocéramiques, il est intéressant d'avoir des compositions de ce type présentant de très faibles coefficients de dilation. En outre, dans le cas d'un matériau composite à matrice vitrocéramique et à agent de renforcement fibreux, la présence d'azote au sein de la matrice est du fait de son caractère réducteur un facteur favorable à la protection des fibres de céramiques non oxydes.

On a déjà essayé de préparer des verres d'alumino-silicate de magnésium oxyazoté. Cependant, les procédés connus ne permettent généralement que la préparation de compositions ponctuelles. Mais surtout, même pour les procédés donnant accès à une gamme de compositions éventuellement plus étendue, ces compositions ne conduisent pas à des vitrocéramiques de coefficient de dilatation acceptable.

En conséquence, un premier objet de l'invention est la préparation d'une large gage de compositions verrières d'alumino-silicate de magnésium oxyazotées.

Un second objet de l'invention est la préparation de compositions vitrocéramiques à propriétés mécaniques améliorées.

Dans ce but, les compositions verrières oxyazotées selon l'invention sont de formule :

$$Mg_x \, Si_Y \, Al \, O_u \, N_v \qquad\qquad (1)$$

dans laquelle :

$x = 1$
$2 \leq y \leq 3$
$6,5 \leq u \leq 8$
$0,1 \leq v \leq 0,3$

et avec comme condition : $2x + 4y + 3 = 2u + 3v$,
cette composition étant convertie lorsqu'elle est chauffée, en une composition vitrocéramique ayant une seule phase cristalline cordiérite.

Par ailleurs, les compositions vitrocéramiques de l'invention sont caractérisées en ce qu'elles présentent une seule phase cristalline du type cordiérite et en ce qu'elles répondent à la formule :

$$Mg_x \, Si_y \, Al \, O_u \, N_v \qquad\qquad (1)$$

dans laquelle :

$x = 1$
$2 \leq y \leq 3$
$6,5 \leq u \leq 8$
$0,1 \leq v \leq 0,3$

et avec comme condition : $2x + 4y + 3 = 2u + 3v$

En outre, le matériau composite selon l'invention est caractérisé en ce qu'il comprend un agent de renforcement et une matrice vitrocéramique présentant la composition donnée ci-dessus.

Enfin, les compositions de l'invention précurseurs de compositions verrières d'alumino-silicate de magnésium oxyazotées sont caractérisées en ce qu'elles comprennent un mélange de a) magnésie et/ou silicates de magnésium, b) silice et c) nitrure d'aluminium, ledit nitrure ayant été obtenu par réaction de l'ammoniac sur l'oxyde d'aluminium.

Les compositions verrières de l'invention peuvent présenter une teneur élevée en azote. Les vitrocéramiques obtenues à partir de ces compositions présentent des coefficients de dilatation très faible, par exemple une valeur de $\alpha\,_{20}^{700}$ d'au plus $2,2.10.^{-6}°C^{-1}$.

D'autres caractéristiques et détails de l'invention seront mieux compris à la lecture de la description et des exemples concrets mais non limitatifs qui vont suivre.

Comme on a vu plus haut, les compositions verrières de l'invention sont à base de magnésium, de silicium, d'aluminium, d'oxygène et d'azote. Elles répondent à la formule (1) $Mg_x\,Si_y\,Al\,O_u N_v$ dans laquelle x, y, u et v vérifient les inégalités données précédemment avec la relation $2x + 4y + 3 = 2u + 3v$.

Le procédé de préparation de ces compositions va maintenant être décrit.

Ce procédé part d'une composition précurseur spécifique. Cette composition est à base de silice et de nitrure d'aluminium. Elle comprend en outre comme élément apportant le magnésium au moins un élément choisi parmi la magnésie et les silicates de magnésium.

Le silicate de magnésium peut être utilisé sous forme $MgSiO_3$ ou $2MgOSiO_2$.

En ce qui concerne le nitrure d'aluminium, celui-ci est d'un type particulier puisqu'il s'agit du produit de réaction de l'ammoniac sur l'oxyde d'aluminium.

On sait qu'habituellement le nitrure d'aluminium est préparé par carbonitruration de l'alumine selon la réaction :

$$Al_2\,O_3 + 3C + N_2 \rightarrow 2\,AlN + 3CO$$

Cette réaction est conduite à une température comprise entre 1600 et 1800°C.

Dans le cadre de la présente invention, le nitrure d'aluminium est préparé par un procédé dans lequel on fait réagir de l'ammoniac en excès sur l'oxyde d'aluminium en poudre. Cette réaction se fait à une temperature qui est fonction du rapport mole d'ammoniac sur mole d'alumine (généralement entre 3 et 5), soit des températures comprises entre 1000 et 1400°C, de manière préférentielle à 1200°C. A cette température, l'ammoniac se dissocie, ce qui explique sa grande réactivité. Il est donc nécessaire de travailler dans des conditions telles que l'ammoniac se décompose au contact de l'oxyde d'aluminium.

L'oxyde d'aluminium utilisé, de granulométrie moyenne de $1\mu$ environ, est porté dans le four de réaction à une température de l'ordre de 1200°C. Le flux d'ammoniac, à une température inférieure à sa température de dissociation, est introduit dans le four et réagit avec l'oxyde d'aluminium pour donner le nitrure d'aluminium.

A titre d'exemple, on peut utiliser de l'alumine commerciale VENTRON [R] de granulométrie moyenne $1\mu m$ à 99,99%. On obtient ainsi un nitrure d'aluminium de granulométrie moyenne $0,2\mu m$ et de surface spécifique BET de l'ordre de 10 m2/g. La fin de la réaction est contrôlée par la variation de masse et l'analyse radiocristallographique. Le nitrure obtenu se présente sous la forme d'une poudre blanche, légèrement hygroscopique. La pureté du nitrure obtenu est vérifiée par analyse de l'azote et par mesure de la masse volumique (p).

Le pourcentage d'azote est de 33,8% en poids et on a une valeur de p de l'ordre de 3,18 g/cm3.

Il est à noter qu'une des caractéristiques de l'invention est l'apport de l'azote et de l'aluminium sous forme du nitrure d'aluminium d'une part, et d'autre part l'utilisation d'un nitrure d'aluminium bien spécifique comme décrit ci-dessus. Toutefois, l'aluminium peut être aussi apporté en partie sous forme d'alumine de préférence de pureté d'au moins 2N5 en combinaison avec le nitrure d'aluminium. Une autre source d'aluminium encore utilisable est l'aluminium sous forme "AION" c'est-à-dire de l'oxynitrure d'aluminium sous forme spinelle.

Plus précisément, la composition précurseur utilisable présente la composition suivante exprimée en mole et en oxyde ou nitrure des différents éléments :

$12\% \leq MgO \leq 35\%$
$55\% \leq SiO_2 \leq 70\%$
$4\% \leq Al_2O_3 \leq 24\%$
$O < AlN \leq 14\%$

On peut plus particulièrement utiliser les compositions précurseurs du type ci-dessous pour lesquelles :

$23\% \leq MgO \leq 34\%$
$56\% \leq SiO_2 \leq 62\%$
$6\% \leq Al_2O_3 \leq 11\%$

$3\% \leq AIN \leq 7\%$

Cette composition est utilisée généralement sous la forme d'une poudre.

La composition précurseur du type défini ci-dessus est chauffée jusqu'à ce qu'on obtienne la fusion. Le chauffage peut se faire par tout moyen connu, par exemple dans un four à induction.

On effectue généralement le chauffage sous atmosphère contrôlée, et sous gaz neutre notamment sous azote exempt d'oxygène.

La température de fusion est habituellement d'environ 1500°C. On maintient le produit à cette température durant le temps nécessaire à son homogénéisation.

On refroidit ensuite le produit.

On obtient alors la composition verrière de l'invention.

Pour obtenir une composition vitrocéramique, la composition verrière obtenue précédemment est soumise à un traitement thermique.

Ce traitement se fait habituellement à une température d'au moins 1100°C et voisine de la température de cristallisation, et provoque une recristallisation de la composition verrière.

Il est à noter qu'on n'observe, dans ce cas, que l'apparition d'une seule phase cristalline qui est la cordiérite. Par ailleurs, cette recristallisation peut se faire en l'absence de tout additif.

On peut toutefois rendre cette recristallisation plus homogène par l'addition d'agents nucléants du type par exemple oxyde de zirconium.

En ce qui concerne sa composition, la vitrocéramique de l'invention présente la composition qui a été donnée plus haut.

Comme on l'a vu plus haut, l'invention concerne aussi un matériau composite à matrice vitrocéramique.

Cette matrice aura la composition de la vitrocéramique qui vient d'être décrite ci-dessus.

Par ailleurs, le matériau composite de l'invention comprend un agent de renforcement.

Il s'agit généralement d'un agent de type fibreux par exemple de renforts céramiques constitués par un assemblage, organisé ou aléatoire, de fibres longues et continues en céramique. Ainsi, les fibres utilisées peuvent se présenter dans la matrice selon une configuration unidirectionnelle, ou sous la forme de tissus, ou de mats non tissés, ou bien encore selon une configuration multidirectionnelle.

Eventuellement, l'agent de renforcement pourrait se présenter sous la forme de libres courtes et/ou de whiskers, orientés de façon aléatoire dans la matrice.

On peut utiliser aussi corne agents de renforcement des libres longues en combinaison avec des whiskers et/ou des libres courtes dispersés dans la matrice.

D'un point de vue résistance mécanique, les matériax composites préférés selon l'invention sont ceux soit à renfort fibreux unidirectionnel, c'est-à-dire constitué de libres substantiellement toutes parallèles entre elles et orientées dans une seule et même direction (composite 1D), soit à renfort fibreux: bidirectionnel, c'est-à-dire constitué de fibres substantiellement toutes parallèles entre elles mais de direction croisée dans deux plans horizontaux successifs, l'angle de croisure étant avantageusement choisi égal à 90° pour obtenir les meilleures propriétés mécaniques (composite 2D).

A titre de libres céramiques pouvant convenir pour la constitution de l'agent de renforcement, on peut citer notamment celles en carbone, en bore, en alumine, en alumine-silice, en alumine-silice-bore, en carbure de silicium, en nitrure de silicium, en nitrure de bore et en carbonitrure de silicium. Bien entendu, des mélanges entre des libres de nature céramique différente peuvent être utilisés à la réalisation du renfort.

Les libres céramiques en carbure de silicium conviennent particulièrement bien pour la réalisation de composites à haute tenue thermomécanique.

La fraction volumique de l'agent de renforcement dans le matériau composite peut être comprise entre 20 % et 70 %, de préférence entre 30 et 50 %.

Par ailleurs, le procédé de fabrication du matériau selon l'invention est caractérisé en ce qu'il comporte les étapes suivantes :

a) on imprègne l'agent de renforcement au moyen d'une barbotine contenant la composition verrière telle que définie plus haut
b) on sèche l'agent de renforcement ainsi imprégné ce par quoi on obtient un préimprégné.
c) on densifie le préimprégné obtenu.
d) on soumet le produit issu de l'étape c) à un traitement thermique.

Plus particulièrement, on forme une barbotine avec la composition verrière telle qu'elle a été décrite plus haut sous forme d'une poudre de granulométrie adaptée, par exemple inférieure à 50µm, de préférence inférieure à 10µm.

Les propriétés de rhéologie et de mouillabilité de la barbotine sont ajustées classiquement par addition de liants et de solvants de nature et de proportions appropriées. Les solvants sont éliminés lors de l'étape du séchage.

Dans une deuxième étape on sèche l'agent de renforcement imprégné issu de l'étape précédente.

Eventuellement, on peut répéter les étapes d'imprégnation et de séchage jusqu'à l'obtention d'un préimprégné ayant la fraction volumique recherchée d'agent de renforcement.

Selon une variante du procédé, convenant plus particulièrement pour la préparation de composites 1D ou 2D tels que définis ci-dessus, on peut également procéder à l'empilement puis au collage de préimprégnés identiques se présentant sous la forme de feuilles composites à renfort fibreux unidirectionnel, l'empilage se faisant soit en gardant parallèle (composite 1D) soit en croisant (composite 2D) les directions des fibres des feuilles superposées.

La troisième étape du procédé est celle de densification ou de frittage.

On notera toutefois qu'avant de procéder au frittage sous charge de la préforme imprégnée et séchée, il est préférable d'éliminer, partiellement ou totalement, les divers liants qui ont été utilisés à la préparation de la barbotine ; cette opération, dite de décrassage, est classiquement réalisée par traitement thermique modéré, sous air ou sous atmosphère neutre, de la préforme.

La densification ou frittage se fait par chauffage.

Selon un mode préférentiel, on procède sous pression.

D'une manière connue en soi il est préférable de réaliser le traitement de densification ou frittage dans une atmosphère neutre.

La dernière étape du procédé est un traitement thermique ou de recristallisation. Cette étape permet de développer la structure cristalline dans la matrice amorphe obtenue à l'issue des étapes précédentes.

Ce traitement se fait à une température d'au moins 1100°C.

Il se fait généralement sans pression. Sa durée est de quelques heures, par exemple entre 2 et 6 heures.

Des exemples vont maintenant être donnés :

EXEMPLE 1

Cet exemple décrit la préparation de deux compositions verrières $C_1$ et $C_2$ selon l'invention.

On broie et on mélange du silicate de magnésium Mg $SiO_3$, de l'oxyde de silicium, de l'oxyde d'aluminium et du nitrure d'aluminium préparé par réaction d'ammoniac sur l'oxyde d'aluminium.

Les proportions respectives de ces éléments sont données ci-dessous en g pour chacune des compositions :

|  | $C_1$ | $C_2$ |
|---|---|---|
| $MgSiO_3$ | 10,334 | 2,087 |
| $SiO_2$ | 9,556 | 1,922 |
| $Al_2O_3$ | 4,532 | 0,770 |
| AIN | 0,575 | 0,230 |

Le mélange pulvérulent est placé dans un creuset de molybdène.

On chauffe le creuset dans un four à induction à 1500°C sous azote exempt d'oxygène.

On refroidit le liquide obtenu par coulage.

On obtient les deux compositions verrières $C_1$ et $C_2$ définies ci-dessous :

$C_1$ Mg $Si_{2,55}$ Al $O_{7,4}$ $N_{0,135}$
$C_2$ Mg $Si_{2,55}$ Al $O_{7,2}$ $N_{0,27}$

et dont les caractéristiques principales sont les suivantes :

|  | $C_1$ | $C_2$ |
|---|---|---|
| Tg (Température de transition vitreuse) | 840°C | 867°C |
| Tc (Température de cristallisation) | 1120°C | 1155°C |
| Tf (Température de fusion) | 1315°C | 1293°C |
| Hr (Facteur de Hruby) | 1,44 | 2,09 |
| p (Masse volumique en g.cm$^{-3}$) | 2,61 | 2,64 |
| Coefficient de dilation thermique : $\alpha\,_{20}^{700}$ x $(10^{6\circ}C^{-1})$ | 4,55 | 4,70 |

EXEMPLE 2

On fait subir à la composition verrière $C_1$ un traitement thermique à 1120°C. On obtient une vitrocéramique. L'analyse radio-cristallographique ne révèle que l'existence de cordiérite comme phase cristallisée. On donne ci-dessous les valeurs du coefficient de dilatation en fonction de la durée du traitement thermique :

| durée h | $\alpha\,_{20}^{700}$ x $(10^{6\circ}C^{-1})$ |
|---|---|
| 0,5 | 4,25 |
| 1,0 | 2,25 |
| 1,5 | 2,19 |
| 2,5 | 2,09 |

EXEMPLE 3

On part de la composition verrière $C_1$. On la broie jusqu'à l'obtention d'un poudre de grains de diamètre inférieur à 10μm.

On prépare à partir de cette poudre une barbotine d'imprégnation de composition suivante :

| - Verre prébroyé | 10,00 kg |
|---|---|
| - Polystyrène | 1,07 kg |
| - Paraffine | 0,16 kg |
| - Déoctyle phtalate | 0,96 kg |
| - Cyclohexane | 10,6 litres |

La barbotine est introduite dans un broyeur en alumine de 50 litres avec 50 kg de billes d'alumine. On broie pendant 15 heures.

On imprègne ensuite des fibres SiC par cette barbotine. On effectue un bobinage des plaques sur un mandrin polygonal. On découpe les nappes et on réalise un empilement à 0°.

On effectue un décrassage sous air ou en atmosphère neutre. On fritte sous charge à une température de 1250°C. La durée du palier est de 1 heure. La pression de mise en forme est de 15 MPa. On refroidit rapidement. On obtient un matériau présentant les caractéristiques suivantes :

Contrainte à rupture en flexion 3 points : 270 MPa
Densité : 2,51
Porosité ouverte : nulle
Diffraction X : la matrice cristallise sous forme de cordiérite
Coefficient de dilatation entre 20 et 700°C : 2,9 $10^{-6\circ}C^{-1}$.

**Revendications**

1. Composition verrière oxyazotée de formule :

$$Mg_x\ Si_y\ Al\ O_u\ N_v \qquad\qquad (1)$$

dans laquelle :

$x = 1$
$2 \leq y \leq 3$
$6,5 \leq u \leq 8$
$0,1 \leq v \leq 0,3$

et avec comme condition : $2x + 4y + 3 = 2u + 3v$ ,
cette composition étant convertie lorsque! le est chauffée, en une composition vitrocéramique ayant une seule phase cristalline cordiérite.

2. Composition vitrocéramique caractérisée en ce qu'elle comprend une seule phase cristalline du type cordiérite et en ce qu'elle répond à la formule :

$$Mg_x\ Si_y\ Al\ O_u\ N_v \qquad\qquad (1)$$

dans laquelle :

$x = 1$
$2 \leq y \leq 3$
$6,5 \leq u \leq 8$
$0,1 \leq v \leq 0,3$

et avec comme condition : $2x + 4y + 3 = 2u + 3v$

3. Matériau composite caractérisé en ce qu'il comprend un agent de renforcement et une matrice vitrocéramique ayant la composition donnée dans la revendication 2.

4. Matériau composite selon la revendication 3, caractérisé en ce que l'agent de renforcement est du type fibreux.

5. Matériau composite selon la revendication 4, caractérisé en ce que l'agent de renforcement est à base de fibres céramiques choisies dans le groupe comprenant les fibres en carbone, en bore, en alumine, en alumine-silice, en alumine-silice-bore, en carbure de silicium, en nitrure de silicium, en nitrure de bore et en carbonitrure de silicium.

6. Matériau composite selon l'une des revendications 3 à 5, caractérisé en ce que la fraction volumique de l'agent de renforcement dans ledit matériau est comprise entre 20 et 70%, notamment entre 30 et 50% en volume.

7. Composition précurseur de composition verrière d'alumino silicate de magnésium oxyazotée caractérisée en ce qu'elle comprend un mélange de a) magnésie et/ou silicates de magnésium, b) silice et c) nitrure d'aluminium, ledit nitrure ayant été obtenu par réaction de l'ammoniac sur l'oxyde d'aluminium.

8. Composition précurseur selon la revendication 7 caractérisée en ce qu'elle comprend en outre de l'oxyde d'aluminium.

9. Composition précurseur selon la revendication 7 ou 8 caractérisée en ce qu'elle présente la composition suivante exprimée en mole et en oxyde ou nitrure :

$12\% \leq MgO \leq 35\%$
$55\% \leq SiO_2 \leq 70\%$
$4\% \leq Al_2O_3 \leq 24\%$
$0\% < AlN \leq 14\%$

**10.** Composition précurseur selon la revendication 9 caractérisé en ce qu'elle présente la composition suivante exprimée en mole et en oxyde ou nitrure :

$23\% \leq MgO \leq 34\%$
$56\% \leq SiO_2 \leq 62\%$
$6\% \leq Al_2O_3 \leq 11\%$
$3\% < AlN \leq 7\%$

**11.** Procédé de préparation d'une composition verrière oxyazotée selon la revendication 1 caractérisé en ce qu'on chauffe jusqu'à la fusion une composition précurseur du type selon l'une des revendications 7 à 10.

**12.** Procédé selon la revendication 11, caractérisé en ce qu'on chauffe sous atmosphère neutre, notamment d'azote.

**13.** Procédé de préparation d'une composition vitrocéramique selon la revendication 2 caractérisé en ce qu'on soumet à un traitement thermique la composition verrière du type selon la revendication 1.

**14.** Procédé selon la revendication 13, caractérisé en ce qu'on effectue le traitement thermique à une température d'au moins 1100°C.

**15.** Procédé de fabrication d'un matériau composite selon l'une des revendications 3 à 6 caractérisé en ce qu'il comporte les étapes suivantes :

a) on imprègne l'agent de renforcement au moyen d'une barbotine contenant la composition verrière selon la revendication 1

b) on sèche l'agent de renforcement ainsi imprégné ce par quoi on obtient un préimprégné

c) on densifie le préimprégné obtenu

d) on soumet le produit issu de l'étape c) à un traitement thermique.

**16.** Procédé selon la revendication 15 caractérisé en ce qu'on effectue le traitement thermique précité à une température d'au moins 1100°C.

## Claims

**1.** Oxygen/nitrogen composition of formula:

$$Mg_x \, Si_y \, Al \, O_u \, N_v \qquad\qquad (1)$$

in which:

$x = 1$
$2 \leq y \leq 3$
$6.5 \leq u \leq 8$
$0.1 \leq v \leq 0.3$

and with as the condition: $2x + 4y + 3 = 2u + 3v$ ,
said composition being converted when heated into a vitroceramic composition having a single crystalline cordierite phase.

**2.** Vitroceramic composition, characterized in that it comprises a single crystalline phase of the cordierite type and in that it complies with the formula:

$$Mg_x \, Si_y \, Al \, O_u \, N_v \qquad\qquad (1)$$

in which:

$x = 1$

$2 \leq y \leq 3$

$6.5 \leq u \leq 8$

$0.1 \leq v \leq 0.3$

and with as the condition: $2x + 4y + 3 = 2u + 3v$ .

3. Composite material, characterized in that it comprises a reinforcing agent and a vitroceramic matrix having the composition given in claim 2.

4. Composite material according to claim 3, characterized in that the reinforcing agent is of the fibrous type.

5. Composite material according to claim 4, characterized in that the reinforcing agent is based on ceramic fibres chosen from within the group comprising carbon, boron, alumina, alumina-silica, alumina-silica-boron, silicon carbide, silicon nitride, boron nitride and silicon carbonitride fibres.

6. Composite material according to one of the claims 3 to 5, characterized in that the volume fraction of the reinforcing agent in said material is between 20 and 70, particularly between 30 and 50 vol.%.

7. Precursor composition of a magnesium oxygen/nitrogen aluminosilicate glass composition, characterized in that it comprises a mixture of a) magnesia and/or magnesium silicates, b) silica and c) aluminium nitride, said nitride being obtained by reacting ammonia with alumina.

8. Precursor composition according to claim 7, characterized in that it also incorporates alumina.

9. Precursor composition according to claim 7 or 8, characterized in that it has the following composition in miles and in oxide or nitride:

$12\% \leq MgO \leq 35\%$

$55\% \leq SiO_2 \leq 70\%$

$4\% \leq Al_2O_3 \leq 24\%$

$0\% < AlN \leq 14\%$

10. Precursor composition according to claim 9, characterized in that it has the following composition in moles and in oxide or nitride:

$23\% \leq MgO \leq 34\%$

$56\% \leq SiO_2 \leq 62\%$

$6\% \leq Al_2O_3 \leq 11\%$

$3\% < AlN \leq 7\%$

11. Process for the preparation of an oxygen/nitrogen glass composition according to claim 1, characterized in that heating takes place to the melting of a precursor composition of the type according to one of the claims 7 to 10.

12. Process according to claim 11, characterized in that heating takes place under a neutral atmosphere, particularly nitrogen.

13. Process for the preparation of a vitroceramic composition according to claim 2, characterized in that the glass composition of the type according to claim 1 undergoes a heat treatment.

14. Process according to claim 13, characterized in that the heat treatment takes place at a temperature of at least 1100°C.

15. Process for the production of a composite material according to one of the claims 3 to 6, characterized in that it involves the following stages:

a) the reinforcing agent is impregnated by means of a slip containing the glass composition of claim 1,

b) the thus impregnated reinforcing agent is dried giving a preimpregnate,

c) the preimpregnate obtained is densified,

d) the product from stage c) undergoes a heat treatment.

**16.** Process according to claim 15, characterized in that the aforementioned heat treatment takes place at a temperature of at least 1100°C.

**Patentansprüche**

**1.** Oxynitrid-Glaszusammensetzung der Formel:

$$Mg_xSi_yAlO_uN_v \qquad\qquad (1)$$

in der:

$x = 1$
$2 \leq y \leq 3$
$6,5 \leq u \leq 8$
$0,1 \leq v \leq 0,3$

mit der Bedingung: $2x + 4y + 3 = 2u + 3v$,

wobei diese Zusammensetzung, wenn sie erwärmt wird, in eine Glaskeramik-Zusammensetzung umgewandelt wird, die eine einzige kristalline Cordierit-Phase hat.

**2.** Glaskeramik-Zusammensetzung, gekennzeichnet dadurch, daß sie eine einzige kristalline Phase vom Cordierit-Typ enthält und daß sie der Formel:

$$Mg_xSi_yAlO_uN_v \qquad\qquad (1)$$

entspricht, in der

$x = 1$
$2 \leq y \leq 3$
$6,5 \leq u \leq 8$
$0,1 \leq v \leq 0,3$

mit der Bedingung: $2x + 4y + 3 = 2u + 3v$.

**3.** Verbundmaterial, dadurch gekennzeichnet, daß es ein Verstärkungsmittel und eine Glaskeramik-Matrix umfaßt, welche die in Anspruch 2 angegebene Zusammensetzung hat.

**4.** Verbundmaterial nach Anspruch 3, dadurch gekennzeichnet, daß das Verstärkungsmittel vom Fasertyp ist.

**5.** Verbundmaterial nach Anspruch 4, dadurch gekennzeichnet, daß das Verstärkungsmittel auf der Basis keramischer Fasern ist, die gewählt sind in der Gruppe, welche die Fasern aus Kohlenstoff, Bor, Aluminiumoxid, Aluminiumoxid-Siliciumoxid, Aluminiumoxid-Siliciumoxid-Bor, Siliciumcarbid, Siliciumnitrid, Bornitrid und Siliciumcarbonitrid umfaßt.

**6.** Verbundmaterial nach einem der Ansprüche 3 bis 5, dadurch gekennzeichnet, daß der Volumenbruch des Verstärkungsmittels in dem genannten Material zwischen 20 und 70 Vol.-%, insbesondere zwischen 30 und 50 Vol.-% liegt.

**7.** Vorläuferzusammensetzung für eine Glaszusammensetzung von Magnesiumaluminiumsilicat-Oxynitrid, dadurch gekennzeichnet, daß sie eine Mischung von a) Magnesiumoxid und/oder Magnesiumsilicaten, b) Siliciumoxid und c) Aluminiumnitrid enthält, wobei das genannte Nitrid durch Reaktion von Ammoniak mit Aluminiumoxid erhalten wurde.

**8.** Vorläuferzusammensetzung nach Anspruch 7, dadurch gekennzeichnet, daß sie ferner Aluminiumoxid enthält.

**9.** Vorläuferzusammensetzung nach Anspruch 7 oder 8, dadurch gekennzeichnet, daß sie die folgende, in Mol und als Oxid oder Nitrid ausgedrückte Zusammensetzung hat:

$12\% \leq MgO \leq 35\%$
$55\% \leq SiO_2 \leq 70\%$
$4\% \leq Al_2O_3 \leq 24\%$
$0\% < AlN \leq 14\%$

**10.** Vorläuferzusammensetzung nach Anspruch 9, dadurch gekennzeichnet, daß sie die folgende, in Mol und als Oxid oder Nitrid ausgedrückte Zusammensetzung hat:

$23\% \leq MgO \leq 34\%$
$56\% \leq SiO_2 \leq 62\%$
$6\% \leq Al_2O_3 \leq 11\%$
$3\% < AlN \leq 7\%$

**11.** Verfahren zur Herstellung einer Oxynitrid-Glaszusammensetzung nach Anspruch 1, dadurch gekennzeichnet, daß man eine Vorläuferzusammensetzung vom Typ entsprechend einem der Ansprüche 7 bis 10 bis zum Schmelzen erwärmt.

**12.** Verfahren nach Anspruch 11, dadurch gekennzeichnet, daß man unter neutraler Atmosphäre, insbesondere von Stickstoff, erwärmt.

**13.** Verfahren zur Herstellung einer Glaskeramik-Zusammensetzung nach Anspruch 2, dadurch gekennzeichnet, daß man die Glaszusammensetzung vom Typ entsprechend Anspruch 1 einer Wärmebehandlung unterzieht.

**14.** Verfahren nach Anspruch 13, dadurch gekennzeichnet, daß man die Wärmebehandlung bei einer Temperatur von mindestens 1100°C ausführt.

**15.** Verfahren zur Herstellung eines Verbundmaterials nach einem der Ansprüche 3 bis 6, dadurch gekennzeichnet, daß es die folgenden Schritte umfaßt:

a) man tränkt das Verstärkungsmittel mit einer Gießmasse, welche die Glaszusammensetzung nach Anspruch 1 enthält,
b) man trocknet das derart getränkte Verstärkungsmittel, wodurch man ein vorimprägniertes Material erhält,
c) man verdichtet das erhaltene vorimprägnierte Material,
d) man unterzieht das aus Schritt c) hervorgehende Produkt einer Wärmebehandlung.

**16.** Verfahren nach Anspruch 15, dadurch gekennzeichnet, daß man die vorgenannte Wärmebehandlung bei einer Temperatur von mindestens 1100°C ausführt.